# EUROPÄISCHE PATENTSCHRIFT

(11) **EP 1 815 731 B1**
(45) Veröffentlichungstag und Bekanntmachung des Hinweises auf die Patenterteilung: **02.04.2008**
(21) Anmeldenummer: 07001934.4
(22) Anmeldetag: 30.01.2007
(51) Int. Cl.: A01C 15/00

(54) **Landwirtschaftliche Bestellkombination**
Agricultural seeder combination
Machine agricole combinée de semis

(30) Priorität: 01.02.2006 DE 102006004518
(43) Veröffentlichungstag der Anmeldung: 08.08.2007
(73) Patentinhaber: Amazonen-Werke H. Dreyer GmbH & Co. KG, 49205 Hasbergen (DE)
(72) Erfinder: Schanzenbach, Volker, 49170 Hagen (DE); Johannaber, Stefan Jan, 49536 Lienen (DE)

(56) Entgegenhaltungen:
- EP-A- 1 767 080
- DE-A1- 4 221 181
- US-A- 4 798 151

## Beschreibung

Die Erfindung betrifft eine landwirtschaftliche Bestellkombination gemäß des Oberbegriffes des Patentanspruches 1.

Derartige landwirtschaftliche Bestellkombinationen sind in der Praxis allgemein bekannt. Diese Bestellkombinationen sind zum Ausbringen von Saatgut und Dünger ausgestattet. Hierzu weisen diese Bestellkombinationen einen Vorratsbehälter für Saatgut und einen Vorratsbehälter für Düngemittel auf. Des Weiteren sind an dem Rahmen der Bestellkombination als Säschare ausgebildete Ablegevorrichtungen zum Ablegen des Saatgutes im Boden und Düngerschare zum Ablegen des Düngers im Boden angeordnet.

Es gibt es zwei Verfahren die Düngemittel auszubringen.

In dem einen Verfahren liegen die Düngemittel in gekörnter Form vor und werden über ein geeignetes am Vorratsbehälter angeordnetes und auf die Ausbringeigenschaft von gekörnten Düngemitteln abgestimmtes Dosiergerät dosiert und über Fördereinrichtungen den Düngerscharen zugeleitet.

Bei dem anderen Verfahren liegen die Düngemittel in flüssiger Form vor und werden als sog. Flüssigdünger aus dem entsprechenden Vorratsbehältern und -tanks sowie geeigneten Dosiereinrichtungen über Förder- und Leiteinrichtungen den Düngerscharen zugeleitet.

Nun besteht das Problem darin, dass die bekannten Düngemitteltanks und zugeordneten Dosiervorrichtungen entweder ausschließlich für die Aufnahme und das Dosieren von gekörnten Düngemitteln oder für Flüssigdünger ausgelegt und geeignet sind. Hierdurch ist es erforderlich, wenn mit der Bestellkombination statt gekörnte Düngemittel Flüssigdünger oder umgekehrt ausgebracht werden soll, dass die Bestellkombination jeweils mit dem entsprechend ausgebildeten Vorratsbehälter mit daran angeordneten Dosiervorrichtungen in gegeneinander austauschbarer Weise für die jeweilige Düngemittelart ausgestattet werden muss.

Der Erfindung liegt die Aufgabe zugrunde, in einfacher Weise eine Bestellkombination zu schaffen, welche auf die jeweilige Düngemittelart, gekörnte Düngemittel oder Flüssigdünger, in einfacher und schneller Weise umrüstbar ist.

Diese Aufgabe wird erfindungsgemäß dadurch gelöst, dass der Vorratsbehälter für Düngemittel zur wahlweisen Aufnahme von gekörnten oder flüssigen Düngemitteln ausgebildet ist, dass an dem Vorratsbehälter für Düngemittel in austauschbarer Weise wahlweise zumindest eine Dosiereinrichtung für gekörnte Düngemittel oder eine Dosiereinrichtung für flüssige Düngemittel anzuordnen ist. Infolge dieser Maßnahmen ist der Vorratsbehälter so ausgebildet, dass er sowohl gekörnte wie auch flüssige Düngemittel aufnehmen kann. Die jeweils erforderliche Dosiereinrichtung lässt sich ein einfacher Weise an dem Vorratsbehälter anordnen, so dass die Bestellkombination sehr schnell in einfacher Weise zum Ausbringen für die jeweilige Düngemittelart, sei es gekörnte Düngemittel oder Flüssigdünger, umgerüstet werden kann.

Ein schneller Austausch der Dosiereinrichtungen wird dadurch gewährleistet, dass die Dosiereinrichtungen mit Schnellwechseleinrichtungen am Vorratsbehälter befestigtbar sind.

Bei Bestellkombinationen für größere Arbeitsbreiten, bei denen die Düngemittel und das Saatgut über größere Strecken gleichmäßig auf die Arbeitsbreite verteilt werden müssen, ist vorgesehen, dass im Rahmen eines Baukastensystems die für die Dosierung des Saatgutes als Zellenraddosierer ausgebildete Dosiereinrichtung mit Einspeiseschleusen und Förderung des Saatgutstromes durch den von einem Gebläse erzeugten Luftstrom und das Gebläse gegen eine Pumpe und Flüssigkeitsdosiereinrichtungen austauschbar sind.

In einfacher Weise lässt sich eine gleichmäßige Dosierung des Flüssigdüngers dadurch realisieren, dass der/die Dosierelement(e) für die Dosierung des Saatgutes gegen ein(e) Flüssigkeitsquerschnittsregelelement(e) austauschbar ist, dass der Vorratsbehälter zumindest annähernd druckdicht ausgebildet und verschließbar ist, dass der Behälter mittels eines Luftdruckgebläses mit einem zumindest annähernd konstanten Druck beaufschlagbar ist.

Weitere Einzelheiten der Erfindung sind der Beispielsbeschreibung und den Zeichnungen zu entnehmen. Hierbei zeigen
- Fig. 1: die Komponenten für die Ausbringung von körnigen und flüssigen Düngemitteln in Prinzipdarstellung,
- Fig. 2: die für die Ausbringung von körnigen Düngemitteln zusammengesetzte Vorrichtung in Prinzipdarstellung und
- Fig. 3: die für die Ausbringung von flüssigen Düngemitteln zusammengesetzte Vorrichtung in Prinzipdarstellung.

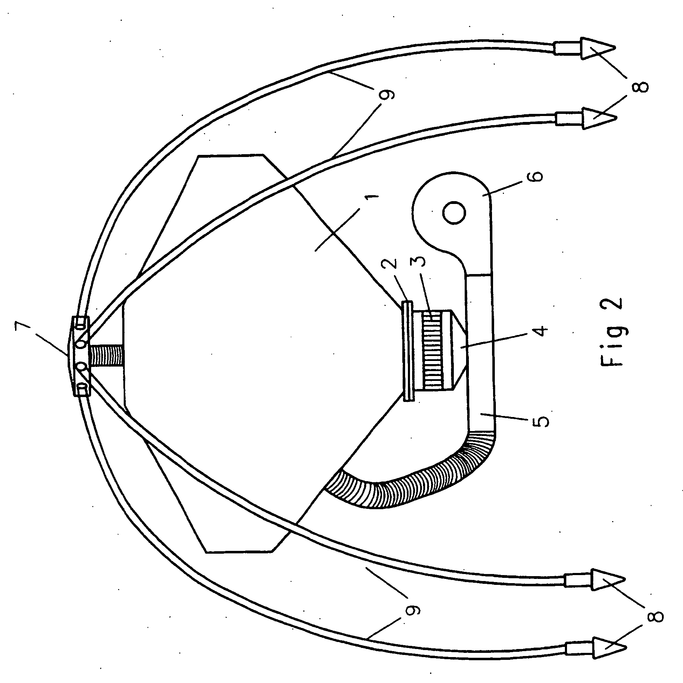

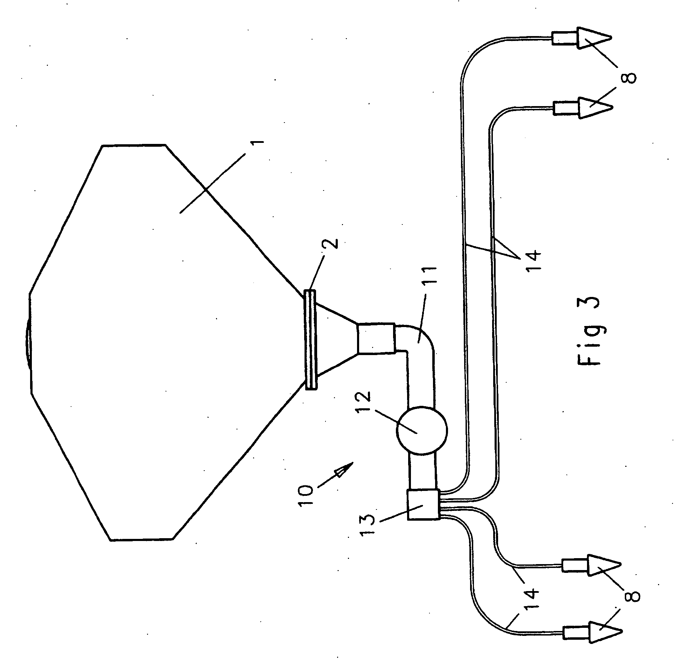

Die gemäß Fig. 2 und 3 ausgestatteten Düngerablegevorrichtungen können separat oder mit einer landwirtschaftlichen Bestellkombination, die nicht darstellt sind, eingesetzt werden. Derartige Bestellkombinationen, die beispielsweise in Verbindung mit den Düngeablegevorrichtungen eingesetzt werden, können Solosämaschinen, Einzelkornsämaschinen oder derartige Maschinen, die Bodenbearbeitungsgeräten zugeordnet sind, sein.

Die Düngemittelablegevorrichtung gemäß Fig. 2 besteht aus dem trichterförmig ausgebildeten Vorratsbehälter 1, an dessen unteren Ende sich eine Flanschstelle 2 befindet. An diese Flanschstelle 2 ist mittels Schnellwechseleinrichtungen eine Dosiereinrichtung 3, die in diesem Fall als Dosiervorrichtung für gekörnte Düngemittel ausgebildet ist, angeordnet. Diese kann beispielsweise ein Zellenraddosierer sein, welcher das sich im Vorratsbehälter 1 befindliche Düngemittel über eine Schleuse 4 in eine darunter angeordnete Förderleitung 5 eindosiert. In dieser Förderleitung 5 befindet sich ein von einem Gebläse 6 erzeugte Luftstrom, welcher das in die Förderleitung 5 eindosierte gekörnte Düngemittel zu einem am Ende der Förderleitung 5 angeordneten Verteilerkopf 7 fördert. Über diesen Verteilerkopf 7 wird in bekannter Weise das Düngemittel in gleichmäßiger Weise auf die von dem Verteilerkopf 7 abgehenden und zu Düngersäscharen 8 oder Düngerablegevorrichtung führenden Förderschläuchen 9 aufgeteilt.

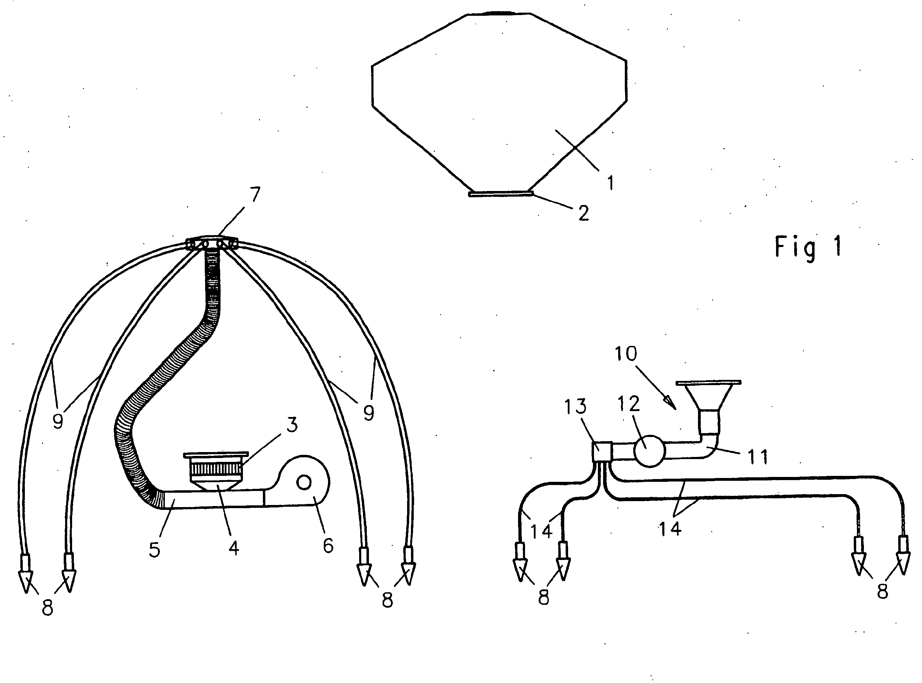

Wenn an Stelle gekörnter Düngemittel Flüssigdünger ausgebracht werden soll, so wird von dem Vorrastbehälter 1 die Dosiereinrichtung 3 und die Förder- 4, 5, 6 und Verteileinrichtungen 7, 9 für gekörnte Düngemittel gemäß Fig. 2 und wie es in Fig. 1 links dargestellt ist, abgenommen, und gegen die in Fig. 1 rechts dargestellten Ausbringvorrichtungen für flüssige Düngemittel ausgetauscht. Hierzu wird über die Schnellwechseleinrichtung die Dosier- und Fördereinrichtung 10 für flüssige Düngemittel an der Flanschstelle 2 des Vorratsbehälters 1 angeordnet.

Der Vorratsbehälter 1 ist sowohl für die Aufnahme von gekörnten wie für flüssige Düngemittel in entsprechend geeigneter Form ausgestattet. Aus dem Vorratsbehälter 1 gelangt das dort befindliche flüssige Düngemittel über die Leitung 11 zu einer motorisch angetriebenen Pumpe 12, welche das flüssige Düngemittel aus dem Vorratstank 1 ansaugt und zu einer bekannten und daher nicht näher dargestellten Dosier- und Verteileinrichtung 13 fördert. Von hieraus gelangt das Düngemittel in dosierter Form über die Zuleitungen 14 zu Flüssigdüngerablagereinrichtungen oder entsprechend geeigneten Scharen 8.

Wie Fig. 1 anschaulich zeigt, können die Dosiervorrichtungen 10, 11, 12, 13 für flüssige Düngemittel gegen Dosiereinrichtungen 3, 4, 5, 6, 7, 8 für gekörnte Düngemittel an einem Vorratstank 1 im Rahmen eines Baukastensystems ausgetauscht werden, so dass die in den Fig. 2 und 3 dargestellten Düngemittelablageeinrichtungen für gekörnte und flüssige Düngemittel mit ein und denselben Vorratstank 1 gesetzt werden können. Somit sind also im Rahmen eines Baukastensystems wie vorstehend beschrieben die für die Dosierung des Düngemittels als Zellenraddosierer 3 ausgebildeten Dosiereinrichtung mit Einspeiseschleusen 4 und Vorrichtung zum Fördern und Verteilen des Düngemittelstromes durch den von einem Gebläse 6 erzeugten Luftstrom und das Gebläse 6 gegen eine Pumpe 12 und Flüssigkeitsdosiereinrichtung 13 austauschbar.

In nicht dargestellter Weise kann die Vorrichtung zum Ausbringen von Flüssigkeitsdünger an Stelle einer Pumpe 12 und üblicher Dosiereinrichtung 13 durch ein Flüssigkeitsquerschnittsregelelement werden ersetzt. Hierbei ist der druckdicht ausgebildete Vorratsbehälter 1 entsprechend verschließbar und der Behälter 1 mittels eines Luftdruckgebläses mit einem zumindest annähernd konstanten bzw. an die Flüssigkeitssäule, die sich im Vorratstank befindet, angepasst beaufschlagbar, so dass der Flüssigdünger entsprechend in gleichmäßiger Weise ausgebracht werden kann.

## Patentansprüche

1. Landwirtschaftliches Gerät, insbesondere Bestellkombination mit zumindest einem Rahmen, an dem Säschare und Düngemittelablegevorrichtungen angeordnet sind, zumindest einem Vorratsbehälter für Saatgut und zumindest einem Vorratsbehälter für Düngemittel, wobei den Vorratsbehältern Dosiereinrichtungen zum Dosieren des Saatgutes oder der Düngemittel zugeordnet sind, wobei von der Dosiereinrichtung für Saatgut Leitelemente zu den Säscharen und von der Dosiereinrichtung für Düngemittel Leitelemente zu den Düngeablegeinrichtungen führen, **dadurch gekennzeichnet, dass** der Vorratsbehälter (1) für Düngemittel zur wahlweisen Aufnahme von gekörnten oder flüssigen Düngemitteln ausgebildet ist, dass an dem Vorratsbehälter (1) für Düngemittel in austauschbarer Weise wahlweise zumindest eine Dosiereinrichtung (3,4,5,6,7)für gekörnte Düngemittel oder eine Dosiereinrichtung (10,11,12,13) für flüssige Düngemittel anzuordnen ist.

2. Bestellkombination nach Anspruch 1, **dadurch gekennzeichnet, dass** im Rahmen eines Baukastensystems die für die Dosierung des gekörnten Düngemittels als Zellenraddosierer (3) ausgebildete Dosiereinrichtung mit Einspeiseschleusen (4) und Förderung (5,7,9) des Düngegutstromes durch den von einem Gebläse (6) erzeugten Luftstrom und das Gebläse gegen eine Pumpe (12) und Flüssigkeitsdosiereinrichtungen (11,13) austauschbar sind.

3. Bestellkombination nach Anspruch 1, **dadurch gekennzeichnet, dass** der/die Dosierelement(e) für die Dosierung des Düngemittels gegen ein(e) Flüssigkeitsquerschnittsregelelement(e) austauschbar ist, dass der Vorratsbehälter zumindest annähernd durch dicht ausgebildet und verschließbar ist, dass der Behälter mittels eines Luftdruckgebläses mit einem zumindest annähernd konstanten Druck beaufschlagbar ist.

## Claims

1. Agricultural device, more especially a combination machine including at least one frame on which sowing coulters and fertiliser discharging apparatuses are disposed, at least one hopper for seed material and at least one hopper for fertiliser material, wherein metering devices for metering the seed material or the fertiliser material are associated with the hoppers, wherein conducting elements lead to the sowing coulters from the metering device for seed material and conducting elements lead to the fertiliser discharging apparatus from the hopper for fertiliser material, **characterised in that** the hopper (1) for fertiliser material is designed for the selective accommodation of granular or liquid fertiliser material, **in that** at least one metering device (3, 4, 5, 6, 7) for granular fertiliser material or one metering device (10, 11, 12, 13) for liquid fertiliser material is to be disposed selectively in an exchangeable manner on the hopper (1) for fertiliser material.

2. Combination machine according to claim 1, **characterised in that** within the framework of a modular assembly system, the metering device, which is in the form of a star feeder metering means (3) for the metering of the granular fertiliser material and includes feed locks (4) and conveying (5, 7, 9) of the fertiliser material flow by means of the air flow generated by a blower (6), and the blower are exchangeable for a pump (12) and liquid metering devices (11, 13).

3. Combination machine according to claim 1, **characterised in that** the metering member/members for metering the fertiliser material is/are exchangeable for a liquid cross-sectional control member or liquid cross-sectional control members, **in that** the hopper is at least approximately pressure-tight and closable, **in that** the container is impingible with an at least approximately constant pressure by means of a compressed air blower.

## Revendications

1. Machine agricole, notamment machine agricole combinée comportant au moins un châssis portant des socs de semoirs et des dispositifs de dépose d'engrais, au moins un réservoir recevant la semence et au moins un réservoir d'engrais, les réservoirs étant équipés d'installations de dosage pour doser la semence et l'engrais,
l'installation de dosage de la semence comportant des éléments de guidage vers les socs de semoirs et l'installation de dosage d'engrais étant reliée par des éléments de guidage aux installations de dépose d'engrais,
**caractérisée en ce que**
le réservoir (1) d'engrais est conçu pour recevoir au choix de l'engrais à l'état de granulés ou à l'état liquide,
le réservoir (1) d'engrais comporte de façon interchangeable, au choix au moins une installation de dosage (3, 4, 5, 6, 7) d'engrais à l'état de granulés ou une installation de dosage (10, 11, 12, 13) pour de l'engrais à l'état liquide.

2. Machine agricole combinée selon la revendication 1,
**caractérisée en ce que**
selon un système de jeu de construction, l'installation de dosage réalisée pour doser l'engrais à l'état de granulés est constituée par des doseurs à roue cellulaire (3), avec des sas d'alimentation (4) et le transfert (5, 7, 9) du flux d'engrais est assuré par une veine d'air fournie par une machine soufflante (6) qui peut être remplacée par une pompe (12) et par des installations de dosage de liquide (11, 13).

3. Machine agricole combinée selon la revendication 1,
**caractérisée en ce que**
le ou les éléments de dosage pour doser l'engrais peuvent être remplacés par un ou des éléments de réglage de la section de passage de liquide,
le réservoir d'alimentation est au moins sensiblement étanche et peut être fermé,
le réservoir est mis à une pression au moins sensiblement constante par une machine soufflante fournissant de l'air comprimé.
